# EUROPEAN PATENT SPECIFICATION

(11) **EP 4 417 389 B1**
(45) Date of publication and mention of the grant of the patent: **30.09.2026**
(21) Application number: 22879767.6
(22) Date of filing: 15.02.2022
(51) Int. Cl.: B29C 43/02, B65D 51/00, D21J 3/00, B65D 43/02

(54) **PULP MOLDED CUP LID**
ZELLSTOFFGEFORMTER BECHERDECKEL
COUVERCLE DE GOBELET MOULÉ EN PÂTE

(30) Priority: 14.10.2021 CN 202122482822 U
(43) Date of publication of application: 21.08.2024
(73) Proprietor: Shurcon Manufacturing (Zhejiang) Co., Ltd, Jiaxing, Zhejiang 314117 (CN)
(72) Inventor: WAN, Ling, Jiaxing, Zhejiang 314117 (CN); HUANG, Haifeng, Jiaxing, Zhejiang 314117 (CN); CHEN, Weimin, Jiaxing, Zhejiang 314117 (CN)
(74) Representative: Herrero & Asociados, S.L.
(86) International application number: PCT/CN2022/076385
(87) International publication number: WO 2023/060814

(56) References cited:
- WO-A1-2011/152703
- WO-A1-2020/230720
- WO-A1-2020/230720
- AU-A4- 2020 100 089
- CN-A- 103 603 234
- CN-A- 107 869 094
- CN-A- 112 176 779
- CN-U- 202 184 535
- CN-U- 202 807 367
- CN-U- 210 712 384
- CN-U- 212 100 051
- US-A1- 2013 248 481
- US-A1- 2017 021 979
- US-A1- 2017 021 979

## Description

### TECHNICAL FIELD

The disclosure relates to the field of manufacturing technologies of pulp cup lids, particularly to a pulp molded cup lid.

### BACKGROUND

Typically, an existing inner wall of a pulp molded cup lid is provided with an inner convex buckle, and the inner convex buckle is buckled on a corresponding cup to achieving sealing between the pulp molded cup lid and the cup. The existing pulp molded cup lid has various structures. For example, a pulp molded cup lid produced by Xingzhong Environmental Protection Company in Taiwan Province, China has an inner convex buckle directly disposed on a side wall of an inverted U-shaped groove. In addition, a pulp molded cup lid produced by some companies has a uniform wall thickness, an outer wall of the pulp molded cup lid is processed by rolling or spinning to form a processing groove, and an inner convex buckle corresponding to the processing groove is disposed on an inner wall of the pulp molded cup lid.

The above two types of pulp molded cup lids basically cover all ways for forming the inner convex buckles. Although the above-mentioned two types of pulp molded cup lids can be locked with corresponding cups, there are still some defects in the above-mentioned two types of pulp molded cup lids. For example, an inner diameter of the inner convex buckle directly disposed on the side wall of the pulp molded cup lid (i.e., the pulp molded cup lid produced by Xingzhong Environmental Protection Company) increases due to radially outward expansion of the inner convex buckle due to demoulding, and the sealing between the pulp molded cup lid and the cup is greatly reduced. At the same time, this manufacturing method is not conducive to the demoulding of the pulp molded cup lid, which leads lower efficiency and higher product scrap rate.

In addition, although the inner convex buckle can be formed by rolling for the pulp molded cup lid with a uniform wall thickness (i.e., the pulp molded cup lid produced by the some companies), when the pulp molded cup lid is closed on the corresponding cup for the second time, the inner convex buckle will have a larger radial outward expansion deformation (the pulp molded cup lid with a uniform wall thickness has a poor structural strength), thereby resulting in poor sealing between the pulp molded cup lid and the cup, as such, there are phenomena such as sealing leakage.

WO 2020/230720 A1 discloses a method for manufacturing a cover material having a top plate and a lateral wall dropping from the peripheral edge of the top plate using a pulp molding mold including a papermaking mold and a drying mold. The top plate of the cover material has an abutment part that abuts with an edge of an opening part of a container, and a downward lateral wall of the abutment part has an undercut part fitted with a lower part of the edge. The papermaking mold has a suction hole at a corresponding spot inside the lateral wall that is a position at which the undercut part is formed. The lateral wall is sucked by the suction hole at any of a timing of non-heating drying, a timing during heating drying, and a timing immediately before mold releasing in molding, and the undercut part having a protruding shape is formed inside the lateral wall.

US 2017/021979 A1 discloses a method of manufacturing an external cover edge of a molded cup lid and a product manufactured by the method, in which an intermediate product of a the molded cup lid is made of plant fiber and manufacture by both "pulp suction shaping" and "thermal compression shaping" processes, and a protruding-out outer cover edge is formed around the periphery of the intermediate product.

### SUMMARY

An objective of the disclosure is to provide a pulp molded cup lid, which can solve the above technical problems. The invention is set out in the appended set of claims.

Compared with the related art, the disclosure has at least the following advantages.

After the inner convex buckle is integrally formed with the longitudinal extension portion, the rolling groove is used for further inward extrusion processing on the inner convex buckle, as such, the inner diameter of the inner convex buckle will be further reduced, and the reduction of the inner diameter of the inner convex buckle can improve a locking force of the cup lid on the cup, and can ensure the sealing performance after the cup lid is removed from the cup and closed on the cup for many times.

Owing to the designing of the rolling groove in the disclosure, the inner diameter of the inner convex buckle may be appropriately reduced during integral forming, and the reduction of the inner diameter can reduce the difficulty of demoulding, reduce the difficulty of mold processing, and further reduce the manufacturing cost thereof.

The inner convex buckle increases the wall thickness of the longitudinal extension portion, which can prolong the service life and improve the structural strength of the pulp molded cup lid.

### BRIEF DESCRIPTION OF DRAWINGS

FIG. 1 illustrates a schematic perspective view of a pulp molded cup lid according to a first embodiment of the disclosure.
FIG. 2 illustrates a schematic top view of the pulp molded cup lid according to the first embodiment of the disclosure.
FIG. 3 illustrates a schematic sectional view of the pulp molded cup lid taken along a line A-A in FIG. 2.
FIG. 4 illustrates an enlarged schematic structural diagram of the pulp molded cup lid at a position B in FIG. 3.
FIG. 5 illustrates a schematic view of a structure of FIG. 4 without reference numbers.
FIG. 6 illustrates a partial schematic structural diagram of a pulp molded cup lid according to a second embodiment of the disclosure.
FIG. 7 illustrates a partial schematic structural diagram of a pulp molded cup lid according to a third embodiment of the disclosure.
FIG. 8 illustrates a schematic structural diagram of a pulp molded cup kit according to a fourth embodiment of the disclosure.

### Reference numerals:

10- lid top portion; 20- transverse extension portion; 200- straight horizontal transverse part; 201- upward arched part; 202- arc-shaped transition convex surface; 30- longitudinal extension portion; 300- upper thicker part; 301- lower thinner part 301; 302- upper vertical inner wall; 303- lower inclined outward inner wall; 40- inner convex buckle; 400- top arc-shaped convex surface; 401- connecting concave surface; 50- rolling groove; L1- spacing; L2- protrusion length.

### DETAILED DESCRIPTION OF EMBODIMENTS

Technical solutions of the disclosure will be further described hereinafter combined with specific embodiments and accompanying drawings of the disclosure, but the disclosure is not limited to these specific embodiments.

### First embodiment

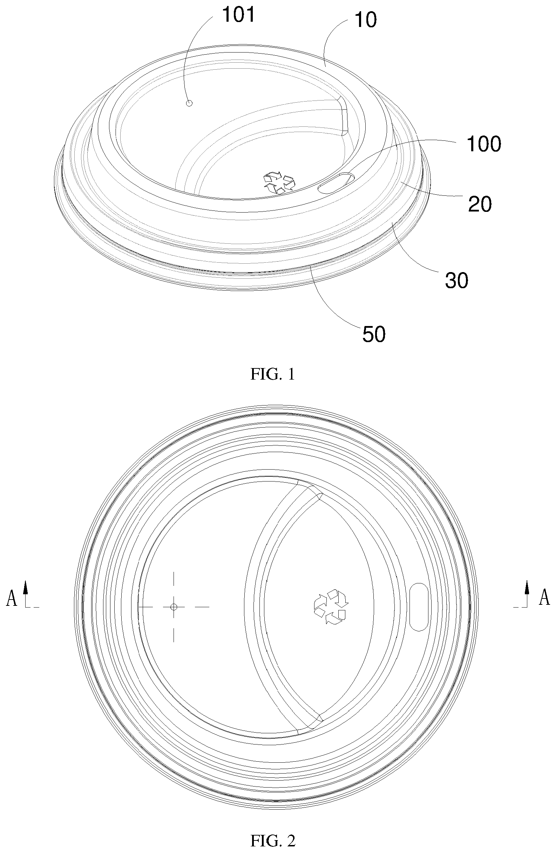

As illustrated in FIGS. 1 and 2, a pulp molded cup lid provided by the first embodiment includes a lid top portion 10. The lid top portion 10 has a sunken part in a center of the lid top portion 10, and a drinking port 100 and a venting hole 101 disposed on the lid top portion 10.

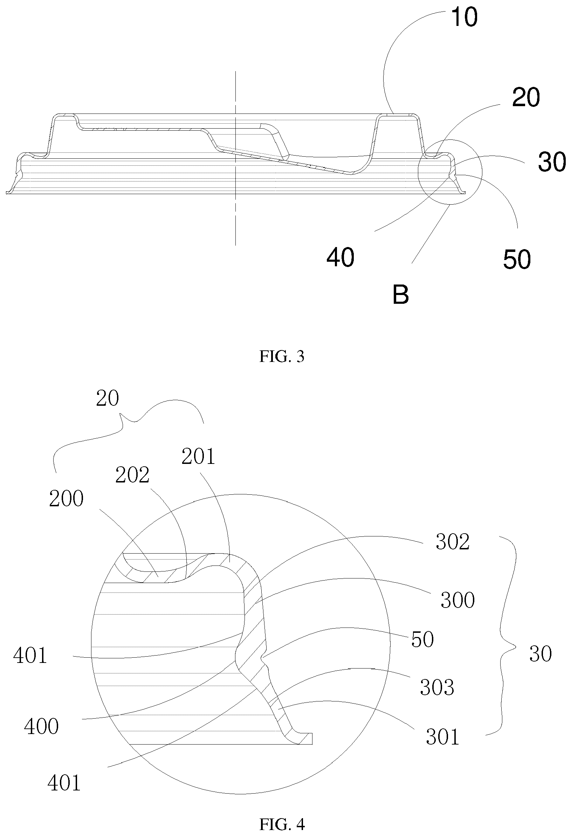

The pulp molded cup lid further includes a transverse extension portion 20, which is connected to a lower side of an outer edge of the lid top portion 10 and extends radially outward (i.e., extending in a radial direction of the lid top portion 10). Specifically, as illustrated in FIG. 3 through FIG. 5, the transverse extension portion 20 includes a straight horizontal transverse part 200 and an upward arched part 201 (i.e., the straight horizontal transverse part 200 arches downward relative to the upward arched part 201, and the upward arched part 201 arches upward relative to the straight horizontal transverse part 200), and a lower surface of the straight horizontal transverse part 200 and a lower surface of the upward arched part 201 are connected by an arc-shaped transition convex surface 202.

The straight horizontal transverse part 200 is connected to the lower side of the outer edge of the lid top portion 10, and the upward arched part 201 is connected to an outer edge of the straight horizontal transverse part 200 facing away from the lid top portion 10.

The arc-shaped transition convex surface 202 can facilitate the pulp molded cup lid to abut against of a top flange of a cup, thereby providing the pulp molded cup lid with closure stability, and facilitating the removal of the pulp molded cup lid.

The pulp molded cup lid further includes a longitudinal extension portion 30, which is connected to an outer edge of the transverse extension portion 20 and extends axially downward (i.e., extending in an axial direction of the lid top portion 10). The longitudinal extension portion 30 is cylindrical. The longitudinal extension portion 30 has only one inner wall, as such, after the pulp molded cup lid is matched with a corresponding cup, the pulp molded cup lid and the cup can form an outer unilateral seal.

The pulp molded cup lid further includes an inner convex buckle 40 disposed on an inner wall of the longitudinal extension portion 30, the inner convex buckle 40 protrudes inward relative to the inner wall of the longitudinal extension portion 30, and the longitudinal extension portion 30 is integrally formed with the inner convex buckle 40 (i.e., the longitudinal extension portion 30 and the inner convex buckle 40 are integrated into a single-piece structure). This integrated forming manner can improve the manufacturing efficiency and the structural strength of the pulp molded cup lid. The inner convex buckle 40 can be buckled on the top flange of the cup to form an outer seal.

As illustrated in FIG. 3 through FIG. 5, an outer wall of the longitudinal extension portion 30 defines a rolling groove 50, which can further reduce an inner diameter of the inner convex buckle 40. The rolling groove 50 is a machined rolling groove or a machined spinning groove. After the inner convex buckle 40 is integrally formed with the longitudinal extension portion 30, the rolling groove 50 is used for further inward extrusion processing on the inner convex buckle 40, as such, the inner diameter of the inner convex buckle 40 will be further reduced, and the reduction of the inner diameter of the inner convex buckle 40 can improve a locking force of the cup lid on the cup, and can ensure the sealing performance after the cup lid is removed from the cup and closed on the cup for many times. Further, owing to the designing of the rolling groove 50 in this embodiment, the inner diameter of the inner convex buckle 40 may be appropriately reduced during integral forming, and the reduction of the inner diameter can reduce the difficulty of demoulding, reduce the difficulty of mold processing and further reduce the manufacturing cost thereof. After the integral forming is completed, a rolling process is carried out, so that the inner diameter of the inner convex buckle 40 reaches a set inner diameter or is smaller than the set inner diameter.

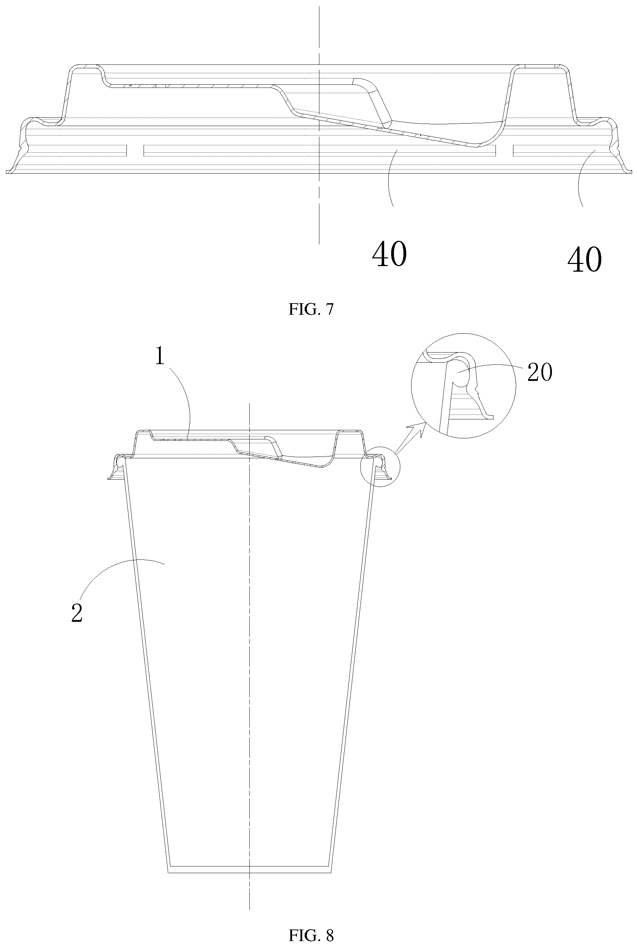

In an embodiment, the inner convex buckle 40 is disposed on the middle of the inner wall of the longitudinal extension portion 30. When the pulp molded cup lid is matched with a cup 2, as illustrated in FIG. 8, a top flange 20 of the cup 2 is located above the inner convex buckle 40 and buckled to a lower side of the pulp molded cup lid. Of course, in some embodiments, the inner convex buckle 40 may also be disposed slightly above the middle of the inner wall of the longitudinal extension portion 30.

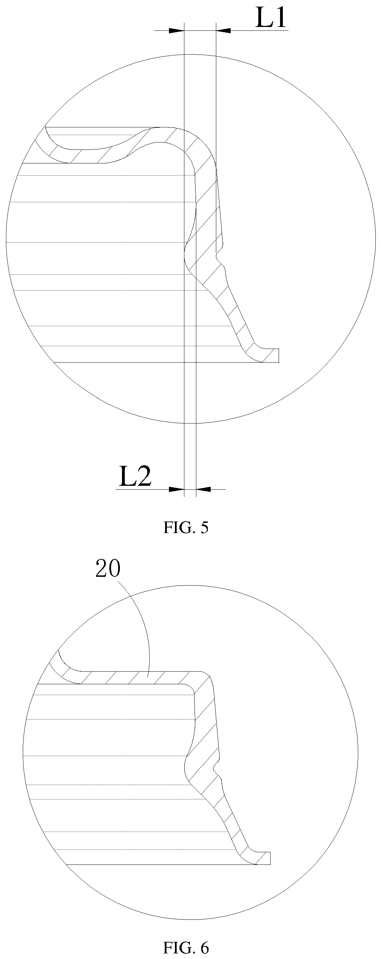

According to the invention, a spacing L1 between a groove bottom of the rolling groove 50 and an inner convex top of the inner convex buckle 40 is greater than a thickness of a single side wall of the longitudinal extension portion 30, as illustrated in FIG. 5. This structure mainly strengthens a wall thickness of the pulp molded cup lid where the inner convex buckle 40 is arranged, to prevent radial deformation of the inner convex buckle 40 under the condition of self-deformation or radial expansion force during demoulding.

In an embodiment, as shown in FIG. 3 through FIG. 5, a groove depth of the rolling groove 50 in a radial direction of the pulp molded cup lid is smaller than a protrusion length L2 between the inner convex top of the inner convex buckle 40 and the inner wall of the longitudinal extension portion 30. The advantage of this structure is to improve a wall thickness strength of the pulp molded cup lid where the inner convex buckle 40 is arranged.

In an embodiment, the rolling groove 50 is a V-shaped annular groove, that is, a circle of annular groove, which can facilitate processing and manufacturing and provide a circle of sealing. Further, the groove bottom of the rolling groove 50 is circular, and chamfers are provided on both sides of a notch of the rolling groove 50 to prevent the notch from being cut off, and at the same time, the aesthetics can be improved.

In an embodiment, the inner convex buckle 40 is an annular inner convex buckle. The design of the annular inner convex buckle can improve the sealing performance of a circle for the cup and form radial structural reinforcement for the inner convex buckle 40.

In an embodiment, as illustrated in FIG. 3 through FIG. 5, a longitudinal section of a side of the longitudinal extension portion 30 includes an upper thicker part 300 and a lower thinner part 301 connected to a lower side of the upper thicker part 300. The inner convex buckle 40 is disposed on an inner wall of the upper thicker part 300; or the inner convex buckle 40 is disposed on an inner wall of a joint between the upper thicker part 300 and the lower thinner part 301.

In an embodiment, a thickness of the upper thicker part 300 and a thickness of the lower thinner part 301 are equal.

In an alternative embodiment, the thickness of the upper thicker part 300 is greater than that of the lower thinner part 301, which can improve the matching strength between the pulp molded cup lid and the cup when locking, and at the same time, it is convenient to improve the structural strength of the upper thicker part 300 provided with the inner convex buckle 40.

In an embodiment, the inner wall of the longitudinal extension portion 30 further includes an upper vertical inner wall 302 and a lower inclined outward inner wall 303 sequentially disposed in that order from top to bottom. Specifically, the upper vertical inner wall 302 is disposed on the inner wall of the upper thicker part 300, and an outer wall of the upper thicker part 300 is an outward inclined surface. The lower inclined outward inner wall 303 is disposed on an inner wall of the lower thinner part 301, the lower inclined outward inner wall 303 is an inclined slope or a larger inclined circular concave surface, and an outer wall of the lower thinner part 301 is a downward inclined outer slope. That is, the lower thinner part 301 is conical, and a diameter of the lower thinner part 301gradually increases from top to bottom, so as to form a guide when the pulp molded cup lid is closed on the cup.

As illustrated in FIG. 3 through FIG. 5, the inner convex buckle 40 has a top arc-shaped convex surface 400, a center of the top arc-shaped convex surface 400 does not overlap with a center of the groove bottom of the rolling groove 50, that is, the two centers are spaced apart from each other and located on the same horizontal plane, and the top arc-shaped convex surface 400 is connected to the upper vertical inner wall 302 and the lower inclined outward inner wall 303 respectively through arc-shaped connecting concave surfaces 401. There are two arc-shaped connecting concave surfaces 401, one is an upper connecting concave surface and the other is a lower connecting concave surface. By using the arc-shaped connecting concave surfaces, it can form transition connecting, which is beneficial to mold opening and demoulding, and can facilitate the pulp molded cup lid to be conveniently separated and combined with the cup.

Moreover, the non-coincidence of the two centers can make the wall thickness of the pulp molded cup lid thicker, so as to improve the structural strength of the pulp molded cup lid.

A manufacturing method for the pulp molded cup lid is provided in an embodiment, and the manufacturing method includes:
S1, performing molding including wet molding and hot pressing molding, to obtain a cup lid with the inner convex buckle 40 directly disposed on the inner wall of the longitudinal extension portion 30 of the cup lid; and
S2, groove machining, including: performing machining on an outer wall of the longitudinal extension portion 30 of the cup lid to define a rolling groove 50 on the outer wall of the longitudinal extension portion 30 opposite to the inner convex buckle 40 to thereby obtain the pulp molded cup lid, where the machining is rolling machining or spinning machining.

### Second embodiment

A structure and a principle of a pulp molded cup lid of the second embodiment are basically the same as that of the first embodiment, but the difference lies in that, as illustrated in FIG. 6, the transverse extension portion 20 is a straight horizontal lateral portion (that is, upper and lower surfaces of the transverse extension portion 20 are plane and parallel to each other).

### Third embodiment

A structure and a principle of a pulp molded cup lid of the third embodiment are basically the same as that of the first embodiment,, except that, as illustrated in FIG. 7, the number of the inner convex buckle 40 is multiple, and the multiple inner convex buckles 40 are respectively multiple arc-shaped inner convex buckles evenly distributed around an inner circumference of the longitudinal extension portion 30, which are made by tightening and contracting radially inward.

### Fourth embodiment

Based on the first embodiment, as illustrated in FIG. 8, a pulp molded cup kit includes a cup 2, and the pulp molded cup kit also includes a pulp molded cup lid 1, which is any one pulp molded cup lid described in the above embodiments, and the pulp molded cup lid 1 is configured to cover a top of the cup 2.

The specific embodiments described herein are merely illustrative of the scope of the disclosure. Those skilled in the technical field to which the disclosure belongs can make various modifications or supplements to the described specific embodiments or substitute the described specific embodiments in some similar ways, without departing from the scope of the disclosure or exceeding the scope of protection defined in the appended claims.

## Claims

1. A pulp molded cup lid, comprising:
a lid top portion (10);
a transverse extension portion (20), connected to a lower side of an outer edge of the lid top portion (10) and extending radially outward; and
a longitudinal extension portion (30), connected to an outer edge of the transverse extension portion (20) and extending axially downward, wherein the longitudinal extension portion (30) is a tubular side wall;
wherein the pulp molded cup lid further comprises: an inner convex buckle (40) disposed on an inner wall of the longitudinal extension portion (30), the inner convex buckle (40) and the longitudinal extension portion (30) are integrated into a single-piece structure, and the inner convex buckle (40) protrudes inward relative to the inner wall of the longitudinal extension portion (30); and an outer wall of the longitudinal extension portion (30) defines a groove (50), said groove (50) reducing an inner diameter of the inner convex buckle (40);
**characterized in that**,
a spacing (L1) between a groove bottom of the groove (50) and an inner convex top of the inner convex buckle (40) is greater than a thickness of a single side wall of the longitudinal extension portion (30).

2. The pulp molded cup lid as claimed in claim 1, wherein a groove depth of the groove (50) is smaller than a protrusion length (L2) between an inner convex top of the inner convex buckle (40) and the inner wall of the longitudinal extension portion (30).

3. The pulp molded cup lid as claimed in any one of claims 1-2, wherein the groove (50) is a V-shaped annular groove.

4. The pulp molded cup lid as claimed in any one of claims 1-2, wherein the inner convex buckle (40) is an annular inner convex buckle.

5. The pulp molded cup lid as claimed in any one of claims 1-2, wherein a number of the inner convex buckle (40) is multiple, the multiple inner convex buckles (40) are respectively multiple arc-shaped inner convex buckles, and the multiple arc-shaped inner convex buckles are evenly distributed around an inner circumference of the longitudinal extension portion (30).

6. The pulp molded cup lid as claimed in claim 1, wherein the inner convex buckle (40) is disposed on a middle of the inner wall of the longitudinal extension portion (30).

7. The pulp molded cup lid as claimed in claim 6, wherein a longitudinal section of a side of the longitudinal extension portion (30) comprises: an upper thicker part (300), and a lower thinner part (301) connected to a lower side of the upper thick part (300); and
wherein the inner convex buckle (40) is disposed on an inner wall of the upper thicker part (300), or, the inner convex buckle (40) is disposed on an inner wall of a joint between the upper thicker part (300) and the lower thinner part (301).

8. The pulp molded cup lid as claimed in claim 1, wherein the inner wall of the longitudinal extension portion (30) comprises an upper vertical inner wall (302) and a lower inclined outward inner wall (303) sequentially disposed in that order from top to bottom; the inner convex buckle (40) has a top arc-shaped convex surface (400); and the top arc-shaped convex surface (400) is connected to the upper vertical inner wall (302) and the lower inclined outward inner wall (303) respectively through connecting concave surfaces (401).

9. The pulp molded cup lid as claimed in claim 1, wherein the transverse extension portion (20) comprises a straight horizontal transverse part (200) and an upward arched part (201), and a lower surface of the straight horizontal transverse part (200) and a lower surface of the upward arched part (201) are connected with each other by an arc-shaped transition convex surface (202).

## Patentansprüche

1. Pulpe-Formbecherdeckel, umfassend:
einen Deckeloberteilabschnitt (10);
einen querverlaufenden Erweiterungsabschnitt (20), der mit einer unteren Seite eines Außenrandes des Deckeloberteilabschnitts (10) verbunden ist und sich radial nach außen erstreckt; und
einen längsverlaufenden Erweiterungsabschnitt (30), der mit einem Außenrand des querverlaufenden Erweiterungsabschnitts (20) verbunden ist und sich axial nach unten erstreckt, wobei der längsverlaufende Erweiterungsabschnitt (30) eine rohrförmige Seitenwand ist;
wobei der Pulpe-Formbecherdeckel ferner umfasst: eine innere konvexe Rastnase (40), die an einer Innenwand des längsverlaufenden Erweiterungsabschnitts (30) angeordnet ist, wobei die innere konvexe Rastnase (40) und der längsverlaufende Erweiterungsabschnitt (30) einstückig ausgebildet sind und die innere konvexe Rastnase (40) relativ zur Innenwand des längsverlaufenden Erweiterungsabschnitts (30) nach innen vorsteht; und wobei eine Außenwand des längsverlaufenden Erweiterungsabschnitts (30) eine Nut (50) begrenzt, wobei die Nut (50) einen Innendurchmesser der inneren konvexen Rastnase (40) verringert;
**dadurch gekennzeichnet, dass**
ein Abstand (L1) zwischen einem Nutgrund der Nut (50) und einer inneren konvexen Spitze der inneren konvexen Rastnase (40) größer ist als eine Dicke einer einzelnen Seitenwand des längsverlaufenden Erweiterungsabschnitts (30).

2. Pulpe-Formbecherdeckel nach Anspruch 1, wobei eine Nuttiefe der Nut (50) kleiner ist als eine Vorstandslänge (L2) zwischen einer inneren konvexen Spitze der inneren konvexen Rastnase (40) und der Innenwand des längsverlaufenden Erweiterungsabschnitts (30).

3. Pulpe-Formbecherdeckel nach einem der Ansprüche 1-2, wobei die Nut (50) eine V-förmige Ringnut ist.

4. Pulpe-Formbecherdeckel nach einem der Ansprüche 1-2, wobei die innere konvexe Rastnase (40) eine ringförmige innere konvexe Rastnase ist.

5. Pulpe-Formbecherdeckel nach einem der Ansprüche 1-2, wobei eine Anzahl der inneren konvexen Rastnasen (40) mehrfach ist, wobei die mehreren inneren konvexen Rastnasen (40) jeweils mehrere bogenförmige innere konvexe Rastnasen sind und die mehreren bogenförmigen inneren konvexen Rastnasen gleichmäßig um einen Innenumfang des längsverlaufenden Erweiterungsabschnitts (30) verteilt sind.

6. Pulpe-Formbecherdeckel nach Anspruch 1, wobei die innere konvexe Rastnase (40) an einer Mitte der Innenwand des längsverlaufenden Erweiterungsabschnitts (30) angeordnet ist.

7. Pulpe-Formbecherdeckel nach Anspruch 6, wobei ein Längsschnitt einer Seite des längsverlaufenden Erweiterungsabschnitts (30) umfasst: einen oberen dickeren Teil (300) und einen unteren dünneren Teil (301), der mit einer unteren Seite des oberen dickeren Teils (300) verbunden ist; und
wobei die innere konvexe Rastnase (40) an einer Innenwand des oberen dickeren Teils (300) angeordnet ist, oder wobei die innere konvexe Rastnase (40) an einer Innenwand einer Verbindungsstelle zwischen dem oberen dickeren Teil (300) und dem unteren dünneren Teil (301) angeordnet ist.

8. Pulpe-Formbecherdeckel nach Anspruch 1, wobei die Innenwand des längsverlaufenden Erweiterungsabschnitts (30) eine obere vertikale Innenwand (302) und eine untere schräg nach außen verlaufende Innenwand (303) umfasst, die in dieser Reihenfolge von oben nach unten angeordnet sind; wobei die innere konvexe Rastnase (40) eine obere bogenförmige konvexe Oberfläche (400) aufweist; und wobei die obere bogenförmige konvexe Oberfläche (400) mit der oberen vertikalen Innenwand (302) bzw. der unteren schräg nach außen verlaufenden Innenwand (303) über verbindende konkave Oberflächen (401) verbunden ist.

9. Pulpe-Formbecherdeckel nach Anspruch 1, wobei der querverlaufende Erweiterungsabschnitt (20) einen geraden horizontalen Querteil (200) und einen nach oben gewölbten Teil (201) umfasst, und wobei eine untere Oberfläche des geraden horizontalen Querteils (200) und eine untere Oberfläche des nach oben gewölbten Teils (201) miteinander über eine bogenförmige Übergangskonvexoberfläche (202) verbunden sind.

## Revendications

1. Couvercle de gobelet moulé en pâte à papier, comprenant:
une partie supérieure de couvercle (10);
une partie d'extension transversale (20), reliée à un côté inférieur d'un bord extérieur de la partie supérieure de couvercle (10) et s'étendant radialement vers l'extérieur; et
une partie d'extension longitudinale (30), reliée à un bord extérieur de la partie d'extension transversale (20) et s'étendant axialement vers le bas, dans lequel la partie d'extension longitudinale (30) est une paroi latérale tubulaire;
dans lequel le couvercle de gobelet moulé en pâte à papier comprend en outre : une bosse convexe intérieure (40) disposée sur une paroi intérieure de la partie d'extension longitudinale (30), la bosse convexe intérieure (40) et la partie d'extension longitudinale (30) étant formées d'une seule pièce, et la bosse convexe intérieure (40) faisant saillie vers l'intérieur par rapport à la paroi intérieure de la partie d'extension longitudinale (30); et une paroi extérieure de la partie d'extension longitudinale (30) définissant une rainure (50), la rainure (50) réduisant un diamètre intérieur de la bosse convexe intérieure (40);
**caractérisé en ce que**
un écart (L1) entre un fond de la rainure (50) et un sommet convexe intérieur de la bosse convexe intérieure (40) est supérieur à une épaisseur d'une seule paroi latérale de la partie d'extension longitudinale (30).

2. Couvercle de gobelet moulé en pâte à papier selon la revendication 1, dans lequel la profondeur de la rainure (50) est inférieure à une longueur de saillie (L2) entre un sommet convexe intérieur de la bosse convexe intérieure (40) et la paroi intérieure de la partie d'extension longitudinale (30).

3. Couvercle de gobelet moulé en pâte à papier selon l'une quelconque des revendications 1 à 2, dans lequel la rainure (50) est une rainure annulaire en V.

4. Couvercle de gobelet moulé en pâte à papier selon l'une quelconque des revendications 1 à 2, dans lequel la bosse convexe intérieure (40) est une bosse convexe intérieure annulaire.

5. Couvercle de gobelet moulé en pâte à papier selon l'une quelconque des revendications 1 à 2, dans lequel le nombre de la bosse convexe intérieure (40) est multiple, les multiples bosses convexes intérieures (40) étant respectivement de multiples bosses convexes intérieures en forme d'arc, et les multiples bosses convexes intérieures en forme d'arc étant réparties uniformément autour d'une circonférence intérieure de la partie d'extension longitudinale (30).

6. Couvercle de gobelet moulé en pâte à papier selon la revendication 1, dans lequel la bosse convexe intérieure (40) est disposée au milieu de la paroi intérieure de la partie d'extension longitudinale (30).

7. Couvercle de gobelet moulé en pâte à papier selon la revendication 6, dans lequel une coupe longitudinale d'un côté de la partie d'extension longitudinale (30) comprend: une partie supérieure plus épaisse (300), et une partie inférieure plus mince (301) reliée à un côté inférieur de la partie supérieure plus épaisse (300); et
dans lequel la bosse convexe intérieure (40) est disposée sur une paroi intérieure de la partie supérieure plus épaisse (300), ou bien la bosse convexe intérieure (40) est disposée sur une paroi intérieure d'une jonction entre la partie supérieure plus épaisse (300) et la partie inférieure plus mince (301).

8. Couvercle de gobelet moulé en pâte à papier selon la revendication 1, dans lequel la paroi intérieure de la partie d'extension longitudinale (30) comprend une paroi intérieure verticale supérieure (302) et une paroi intérieure inférieure inclinée vers l'extérieur (303) disposées séquentiellement dans cet ordre de haut en bas ; la bosse convexe intérieure (40) présente une surface convexe arquée supérieure (400) ; et la surface convexe arquée supérieure (400) est reliée à la paroi intérieure verticale supérieure (302) et à la paroi intérieure inférieure inclinée vers l'extérieur (303) respectivement par des surfaces concaves de raccordement (401).

9. Couvercle de gobelet moulé en pâte à papier selon la revendication 1, dans lequel la partie d'extension transversale (20) comprend une partie transversale horizontale droite (200) et une partie arquée vers le haut (201), et une surface inférieure de la partie transversale horizontale droite (200) et une surface inférieure de la partie arquée vers le haut (201) sont reliées l'une à l'autre par une surface convexe de transition arquée (202).
